# EUROPÄISCHE PATENTSCHRIFT

(11) **EP 2 640 990 B1**
(45) Veröffentlichungstag und Bekanntmachung des Hinweises auf die Patenterteilung: **29.06.2016**
(21) Anmeldenummer: 11779688.8
(22) Anmeldetag: 10.11.2011
(51) Int. Cl.: F16C 19/18, F16C 39/02, F16C 23/08, F16C 33/58, F16C 32/04

(54) **LAGERVORRICHTUNG MIT EINEM FANGLAGER**
BEARING DEVICE HAVING A SAFETY BEARING
ENSEMBLE PALIER À PALIER DE SÉCURITÉ

(30) Priorität: 20.11.2010 DE 102010052101
(43) Veröffentlichungstag der Anmeldung: 25.09.2013
(73) Patentinhaber: Schaeffler Technologies AG & Co. KG, 91074 Herzogenaurach (DE)
(72) Erfinder: PAUSCH, Michael, 97456 Dittelbrunn (DE); MAY, Wolfgang, 97267 Himmelstadt (DE); MASUCH, Horst, 97422 Schweinfurt (DE); GEORGI, Jan, 97422 Schweinfurt (DE)
(86) Internationale Anmeldenummer: PCT/EP2011/069817
(87) Internationale Veröffentlichungsnummer: WO 2012/065899

(56) Entgegenhaltungen:
- DE-T2- 60 209 752
- JP-A- 2002 130 279
- JP-U- H 061 845
- US-A- 4 628 522
- US-A1- 2002 181 818
- US-B1- 6 661 143

## Beschreibung

Die Erfindung betrifft eine Lagervorrichtung nach dem Oberbegriff von Anspruch 1 bzw. 5.
Aus der Praxis sind Lagervorrichtungen bekannt, bei denen ein Lager eine Welle drehbar lagert, wobei die Lagervorrichtung ein Fanglager aufweist, das bei einem Ausfall des Lagers die Welle aufnimmt, so dass die Welle in dem Fanglager auslaufen kann. Der auf die Welle weisende Lagerring des Fanglagers weist im normalen Betrieb der Lagervorrichtung einen Abstand zu der Welle auf und ist mechanisch unbelastet. Ist das Fanglager als Wälzlager ausgebildet oder umfasst das Fanglager mindestens ein Wälzlager, ist die Wälzlagerreihe dieses Wälzlager nicht oder durch ein zusätzliches Federmittel nur wenig mechanisch vorgespannt. Bekannt sind beispielsweise Lagervorrichtungen mit einem Magnetlager und einem Fanglager, das die in dem Magnetlager gelagerte Welle bei einem Stromausfall aufnimmt.
Bei dem Auftreffen der Welle in dem Fanglager treten hohe Kräfte und Beschleunigungen auf. Insbesondere, wenn das Fanglager aus Wälzlager ausgebildet ist und mindestens eine Reihe von Wälzkörpern umfasst, besteht die Gefahr, dass das Fanglager kurzfristig ausfällt, da die Wälzkörper eine hohe Anfangsbeschleunigung erfahren und aufgrund der fehlenden oder nur geringen mechanischen Vorspannung der Wälzkörper ein Schlupf auftritt, der eine Beschädigung sowohl der Wälzkörper als auch der Lagerringe des Fanglagers mit sich bringt, so dass nach einem oft nur einmaligen Betrieb das Fanglager ausgetauscht werden muss.

In der Praxis tritt häufig der Fall auf, dass die Welle unter einem Winkel, bezogen auf die Drehachse des auf die Welle weisenden Lagerrings des Fanglagers, auf diesen Lagerring auftritt. Ebenso tritt der Fall auf, dass die Welle nicht nur verkippt, bezogen auf diese Drehachse, sondern auch gekrümmt in das Fanglager eintritt. Ein Grund hierfür kann das zeitversetzte Freigeben der Welle in dem Lager oder der Ausfall nur eines Teillagers von mehreren Teillagern des Lagers sein. Aufgrund der Verkippung bzw. der Durchbiegung der Welle erfährt ein Abschnitt des die Welle aufnehmenden Lagerrings des Fanglagers eine hohe Krafteinwirkung, während ein anderer Abschnitt dieses Lagerrings eine nur geringe Krafteinwirkung erfährt. Insbesondere bei einem als mehrreihiges Wälzlager ausgebildeten Fanglager erfährt eine Wälzkörperreihe eine starke Belastung, die zu einem Schlupf führt, während die andere Wälzkörperreihe keine Belastung erfährt. Umfasst das Fanglager zwei benachbarte, aneinander anliegende Wälzlager, wird eines der beiden Wälzlager stark und das andere nur gering belastet. In beiden Fällen tritt ein starker Verschleiß in dem Fanglager auf, das ggf. nach nur einem Einsatz ausgetauscht werden muss.

DE 602 09 752 T2 beschreibt eine Lagervorrichtung mit einem Magnetlager sowie einem Fanglager, wobei das Fanglager zwei axial benachbarte, mit ihren Stirnflächen aneinander anliegende, mechanisch vorgespannte Schrägkugellager umfasst. Die auf die Welle weisende, zweigeteilte Mantelfläche des zweigeteilten Lagerrings des Fanglagers ist, bis auf eine bei Wälzlagern übliche Kantenverrundung nahe den Stirnflächen, zylindrisch ausgebildet und weist eine gerade, parallel zu der Drehachse der beiden Schrägkugellager weisende Kontur auf. Tritt die Welle bezogen auf die Drehachse verkippt oder gekrümmt in das Fanglager ein, werden die beiden Schrägkugellager ungleichmäßig belastet, wobei in einem der beiden Schrägkugellager ein besonders starker Schlupf auftritt. Das Fanglager weist dadurch nur eine verkürzte Lebensdauer auf.

DE 197 29 450 C2 beschreibt eine Lagervorrichtung zur drehbaren Lagerung eines Rotors in einem Lager, wobei zwei als einreihige Kugellager ausgebildete Wälzlager als Fanglager vorgesehen sind. Der jeweilige auf die Rotorwelle weisende Lagerring der Fanglager weist eine, bis auf die übliche Kantenverrundung an dem Übergang zu der Stirnfläche, zylindrische Mantelfläche mit einer im wesentlichen geraden, parallel zu der Drehachse des Lagerrings verlaufenden Kontur auf. Tritt die Welle verkippt oder gekrümmt in eines der beiden Kugellager ein, wird das Kugellager ungleichmäßig belastet und dessen Lebensdauer deutlich verkürzt.

US 4,628,522 und US 2002/181818 A1 offenbaren Lagervorrichtungen nach dem Oberbegriff der unabhängigen Ansprüchen.

### Aufgabe der Erfindung

Es ist die Aufgabe der Erfindung, bei der eingangs beschriebenen Lagervorrichtung die Lebensdauer des Fanglagers zu verlängern.

### Zusammenfassung der Erfindung

Diese Aufgabe wird nach Anspruch für das eingangs genannte Fanglager der Lagervorrichtung erfindungsgemäß dadurch gelöst, dass ein auf die Welle weisender Lagerring des Fanglagers eine Mantelfläche mit einer zu der Welle weisenden konvexen Kontur aufweist.

Die konvexe Kontur ist dabei zusätzlich zu einer ggf. vorhandenen Kantenverrundung des Lagerrings vorgesehen, wobei die Kantenverrundung nur eine geringe Erstreckung in axialer Richtung aufweist (weniger als ca. 10 %), die konvexe Kontur jedoch sich zusätzlich zu der Kantenverrundung über mehr als ca. 20 % der axialen Erstreckung des Lagerrings erstreckt. Die Konvexität der Kontur ist dabei in Bezug auf eine gedachte zylindrische Referenzfläche vorgesehen, wobei die zylindrische Referenzfläche drehsymmetrisch um die Drehachse des Lagerrings angenommen wird.
Die konvexe Kontur bietet einen definierten, auf die jeweilige Lagervorrichtung einstellbaren Auftreffpunkt der Welle in dem auf die Welle weisenden Lagerring des Fanglagers. Aufgrund der Konvexität der Kontur liegt dieser Auftreffpunkt zwischen den beiden Stirnflächen des Lagerrings, beispielsweise mittig zwischen den beiden Stirnflächen des Lagerrings. Dabei verteilt sich die bei dem Auftreffen der Welle auftretende Kraft möglichst gleichmäßig über den gesamten Lagerring und kann von dem Fanglager insgesamt besser aufgenommen werden. Als Ergebnis reduziert sich der Schlupf und die prognostizierte Lebensdauer des Fanglagers erhöht sich.
Ist der auf die Welle weisende Lagerring als Lagerring eines einreihigen Wälzlagers ausgebildet, wirkt die bei dem Auftreffen der Welle auftretende Kraft nahe der Laufbahn der Wälzkörper und damit insbesondere in radialer Richtung, so dass axiale Kraftkomponenten unterdrückt werden.
Ist in einer bevorzugten Ausgestaltung der auf die Welle weisende Lagerring als gemeinsamer Lagerring eines mindestens zweireihigen Wälzlagers ausgebildet, verteilt sich die von dem Lagerring aufgenommene Kraft weitgehend gleichmäßig auf die mindestens zwei Reihen des Fanglagers.

Erfindungsgemäß ist vorgesehen, dass die Kontur des auf die Welle weisenden Lagerrings einen zylindrischen Abschnitt umfasst, der sich über maximal ca. 80% der axialen Erstreckung des Lagerrings erstreckt. Der zylindrische Abschnitt ermöglicht dabei die Abstützung der in das Fanglager fallenden Welle auf einer vergrößerten Fläche. Der zylindrische Abschnitt der Kontur ist dabei bezogen auf die oben definierte zylindrische Referenzfläche hin zu der Welle verschoben angeordnet.

Erfindungsgemäß ist vorgesehen, dass die Kontur des auf die Welle weisenden Lagerrings mindestens einen konischen Abschnitt aufweist. Der konische Abschnitt schließt dabei mit der zylindrischen Referenzfläche einen Winkel von weniger als ca. 15 °, insbesondere ca. 5°, ein.

Vorzugsweise ist vorgesehen, dass der auf die Welle weisende Lagerring spiegelsymmetrisch zu einer axialen Teilungsebene ausgebildet ist.

Alternativ hierzu kann vorzugsweise vorgesehen sein, dass der auf die Welle weisende Lagerring asymmetrisch zu einer axialen Teilungsebene ausgebildet ist. Durch die Asymmetrie lässt sich dem Umstand Rechnung tragen, dass die Verkippung bzw. die Krümmung der Welle häufig einen typischen Winkel aufweist, so dass die Kräfte gleichmäßiger auf den Lagerring verteilt werden können.
Die zu der Welle weisende konvexe Kontur der Mantelfläche des Lagerrings kann durch Materialabtragen, ausgehend von einer zylindrischen Mantelfläche mit einer geraden Querschnitts-Kontur, hergestellt sein.

Weitere Vorteile und Merkmale ergeben sich aus den abhängigen Ansprüchen sowie aus der folgenden Beschreibung eines bevorzugten Ausführungsbeispiels zusammen mit Abwandlungen der Erfindung.
Die Erfindung wird im folgenden unter Bezugnahme auf die anliegenden Zeichnungen näher beschrieben und erläutert.

### Kurze Beschreibung der Zeichnungen

Fig. 1 zeigt ausschnittsweise eine teilweise geschnittene Ansicht eines Ausführungsbeispiels einer erfindungsgemäßen Lagervorrichtung, und
Fig. 2 zeigt in den Teilbildern a.) bis d.) vier Abwandlungen des in Fig. 1 dargestellten Ausführungsbeispiels.

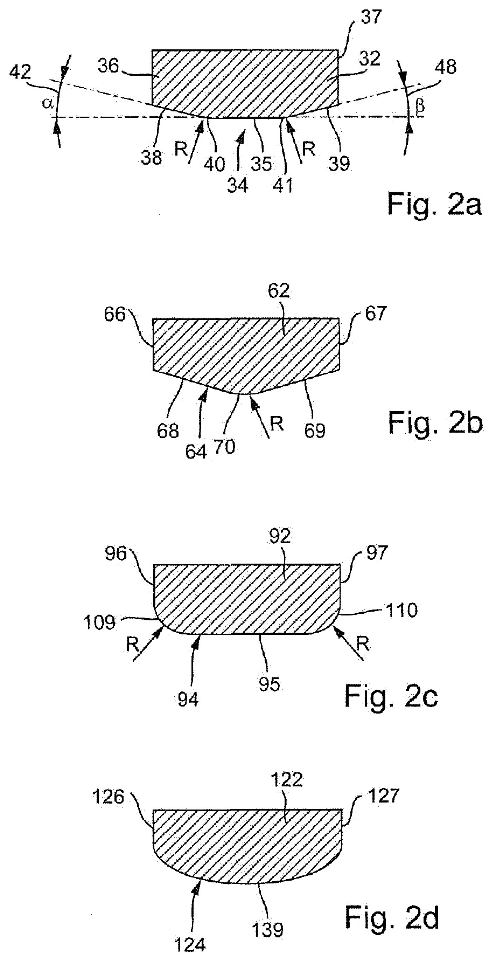

Die Abwandlungen der Figuren 2a und 2b entsprechen erfindungsgemäße Lagervorrichtungen. Die Abwandlungen der Figuren 2c und 2d jedoch nicht.

### Detaillierte Beschreibung der Zeichnung

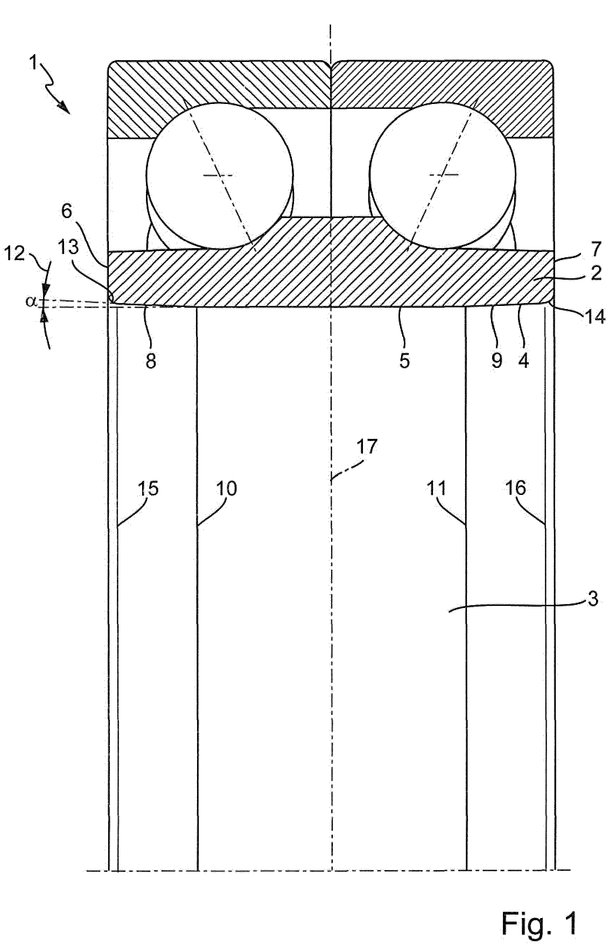

Fig. 1 zeigt eine Lagervorrichtung, umfassend eine bildlich nicht dargestellte Welle, die in einem Lager, nämlich einem Magnetlager, drehbar gelagert ist. Die Lagervorrichtung umfasst weiter ein Fanglager 1, das als zweireihiges Schrägkugellager ausgebildet ist, wobei das dargestellte Fanglager 1, ggf. zusammen mit mindestens einem weiteren Fanglager, die Welle bei einem Ausfall des Magnetlagers aufnimmt.

Das Fanglager 1 umfasst einen auf die Welle weisenden Lagerring 2, nämlich den Innenring des Wälzlagers, der eine innere Mantelfläche 3 aufweist, die eine im Schnitt erkennbare zu der Welle weisende konvexe Kontur 4 aufweist. Aufgrund der konvexen Kontur 4 ist die Schnittlinie nicht mehr gerade, wie es bei einer zylindrischen inneren Mantelfläche der Fall ist, sondern steht zu der Welle hin vor. In einem normalen Betrieb der Lagervorrichtung, wenn die Welle in dem Magnetlager gelagert ist, weist die konvexe Kontur 4 einen Abstand zu der Mantelfläche der Welle auf. In Kontakt mit der konvexen Kontur 4 kommt die Welle dann, wenn das Magnetlager ausfällt oder ausgeschaltet ist.

Die konvexe Kontur 4 umfasst einen zylindrischen Abschnitt 5, der mittig zwischen den beiden Stirnflächen 6, 7 des Lagerrings 2 angeordnet ist. Im Bereich des zylindrischen Abschnitts 5 ist die Schnittlinie gerade. Der zylindrische Abschnitt erstreckt sich über ca. 60 % der gesamten axialen Erstreckung des Lagerrings 2, also über ca. 60 % des Abstandes der beiden Stirnflächen 6, 7, gemessen in Richtung der Drehachse des Lagerrings 2. In einer Abwandlung des dargestellten Ausführungsbeispiels kann sich der zylindrische Abschnitt 4 über bis zu ca. 80 % der gesamten axialen Erstreckung des Lagerrings 2 erstrecken, jedoch nicht über weniger als ca. 40 % der axialen Erstreckung.

Die konvexe Kontur 4 umfasst weiter einen ersten konischen Abschnitt 8 sowie einen zweiten konischen Abschnitt 9, wobei jeder der beiden konischen Abschnitte 8, 9 an den zylindrischen Abschnitt 5 entlang einer Kante 10, 11 an der inneren Mantelfläche 3 angrenzt. Im Bereich der konischen Abschnitte nimmt der Innendurchmesser der inneren Mantelfläche hin zu den Stirnflächen 6, 7 linear zu. Beide konische Abschnitte 8, 9 erstrecken sich zusammen über ca. 35 % der axialen Erstreckung des Lagerrings 2. Bezogen auf eine zylindrische Referenzfläche, die beispielsweise durch den zylindrischen Abschnitt 5 gegeben ist, schließt jeder der beiden konischen Abschnitte 8, 9 einen Winkel 12 von ca. 5° ein, wie in Fig. 1 für den ersten konischen Abschnitt 8 gezeigt ist.

Nicht Teil der konvexen Kontur 4 sind zwei Kantenverrundungen 13, 14 an den Kanten der Mantelfläche 3 zu den beiden Stirnflächen 6, 7. Die Kantenverrrundungen 13, 14 bilden mit den angrenzenden konischen Abschnitten 8, 9 Kanten 15, 16 aus. Die Kantenverrundungen 13, 14 erstrecken sich zusammen über insgesamt ca. 5 % der gesamten axialen Erstreckung des Lagerrings 2, so dass sich die auf die Welle weisende konvexe Kontur 4 im Wesentlichen entlang der gesamten axialen Erstreckung des Lagerrings 2 erstreckt. In einem abgewandelten Ausführungsbeispiel kann vorgesehen sein, die Kantenverrundungen 13, 14 fortzulassen, so dass die konvexe Kontur, beispielsweise die konischen Abschnitte 8, 9, unmittelbar an die Stirnflächen 6, 7 angrenzen.

Der auf die Welle weisende Lagerring 2 - und damit die konvexe Kontur 4 - ist spiegelsymmetrisch zu einer axialen Teilungsebene 17 ausgebildet. Weiter ist der auf die Welle weisende Lagerring 2 als gemeinsamer Lagerring des zweireihigen Schrägkugellagers ausgebildet.

Fig. 2 zeigt in vier Teilbildern jeweils eine Abwandlung zu der in Fig. 1 dargestellten konvexen Kontur 4 der inneren Mantelfläche 3 des auf die Welle weisenden Lagerrings 2 des Fanglagers 1. Zu beachten ist, dass die Kontur in Richtung zu der Drehachse des Lagerrings vergrößert dargestellt ist, um den Verlauf der Kontur besser erkennbar zu machen.

Fig. 2a zeigt eine konvexe Kontur 34, die einen zylindrischen Abschnitt 35 sowie zwei konische Abschnitte 38, 39 umfasst, wobei der erste konische Abschnitt 38 einen ersten Winkel 42 und der zweite konische Abschnitt 39 einen zweiten Winkel 48 mit einer durch den zylindrischen Abschnitt 35 gebildeten Referenzfläche einschließt. Die Winkel 42, 48 können einen verschiedenen Betrag aufweisen und weniger als jeweils ca. 15° betragen. Die konischen Abschnitte 38, 39 gehen an den zylindrischen Abschnitt 35 entlang abgerundeter Kanten 40, 41 über. Der zylindrische Abschnitt 35 erstreckt sich über ca. 45 % der gesamten axialen Erstreckung des Lagerrings 32. Die konvexe Kontur 34 grenzt unmittelbar an die Stirnflächen 36, 37 des Lagerrings 2, so dass keine Kantenverrundung vorgesehen ist.

Fig. 2b zeigt eine konvexe Kontur 64, die einen ersten konischen Abschnitt 68 und einen an diesen entlang einer abgerundeten Kante 70 angrenzenden zweiten konischen Abschnitt 69 umfasst, wobei die konischen Abschnitte 68, 69 unmittelbar an die Stirnflächen 66, 67 des Lagerrings 62 angrenzen.
Fig. 2c zeigt eine konvexe Kontor 94, die einen mittig zwischen Stirnflächen 96, 97 angeordneten zylindrischen Abschnitt 95 umfasst, der sich entlang ca. 80% der gesamten axialen Erstreckung des Lagerrings 92 erstreckt. Die konvexe Kontur 94 umfasst zwei gekrümmte Abschnitte 109, 110, die jeweils einen Viertelkreis beschreiben und somit als Kreisbogensegment ausgebildet sind. Die gekrümmten Abschnitte 109, 110 gehen ohne Kante in die Stirnflächen 96, 97 bzw. in den zylindrischen Abschnitt 95 über.
Fig. 2d zeigt eine konvexe Kontur 124, deren einziger Abschnitt durch einen gekrümmten Abschnitt 139 gebildet wird, der sich zwischen den beiden Stirnflächen 106 und 107 erstreckt. Der Verlauf der Krümmung des Abschnittes 139 ist entlang der gesamten axialen Erstreckung des Lagerrings 122 durch eine quadratische Funktion bestimmt.
Die in Fig. 2a bis 2d dargestellten Abwandlungen sieht jeweils vor, dass sich die konvexe Kontur 34, 64, 94, 124 entlang der gesamten axialen Erstreckung des Lagerrings 32, 62, 92 122 erstreckt, so dass jeweils keine Kantenverrundung vorgesehen ist.

Die in Fig. 2a und 2b dargestellten Abwandlungen zeigen jeweils konvexe Konturen 34 und 64 die symmetrisch zu einer gedachten axialen Teilungsebene des jeweiligen Lagerrings 32, 62 ausgebildet sind.
Es versteht sich, dass auch zu der Teilungsebene asymmetrische Konturen vorgesehen sein können; beispielsweise können, ausgehend von der in Fig. 2a dargestellten Abwandlung, die Winkel 42 und 48 verschieden ausgebildet sein.

Die Erfindung wurde vorstehend anhand eines Ausführungsbeispiels beschrieben, bei dem die Welle als Vollwelle ausgebildet war und der auf die Welle weisende Lagerring der Innenring eines Lagers, nämlich eines zweireihigen Schrägkugellagers, war.

### Bezugszeichenliste

- 1: Fanglager
- 2: Lagerring
- 3: Mantelfläche
- 4: konvexe Kontur
- 5: zylindrischer Abschnitt
- 6: erste Stirnfläche
- 7: zweite Stirnfläche
- 8: erster konischer Abschnitt
- 9: zweiter konischer Abschnitt
- 10: erste Kante
- 11: zweite Kante
- 12: Winkel
- 13: Kantenverrundung
- 14: Kantenverrundung
- 15: Kante
- 16: Kante
- 17: axiale Teilungsebene

- 32: Lagerring
- 34: konvexe Kontur
- 35: zylindrischer Abschnitt
- 38: konischer Abschnitt
- 39: konischer Abschnitt
- 40: Kante
- 41: Kante
- 42: erster Winkel
- 48: zweiter Winkel

- 62: Lagerring
- 68: erster konischer Abschnitt
- 69: zweiter konischer Abschnitt
- 70: abgerundete Kante

- 92: Lagerring
- 94: konvexe Kontur
- 95: zylindrischer Abschnitt
- 96: Stirnfläche
- 97: Stirnfläche
- 109: erster gekrümmter Abschnitt
- 110: zweiter gekrümmter Abschnitt

- 122: Lagerring
- 124: konvexe Kontur
- 126: Stirnfläche
- 127: Stirnfläche
- 139: gekrümmter Abschnitt

## Patentansprüche

1. Lagervorrichtung, umfassend ein Lager, das eine Welle drehbar lagert, und ein Fanglager (1), das die Welle bei Ausfall des Lagers aufnimmt, wobei ein auf die Welle weisender Lagerring (2; 32) des Fanglagers (1) eine innere Mantelfläche (3) mit einer zu der Welle weisenden konvexen Kontur (4; 34) aufweist, wobei die Kontur (4; 34) der inneren Mantelfläche (3) des auf die Welle weisenden Lagerrings (2; 32) einen zylindrischen Abschnitt (5; 35) sowie zwei beidseitig an den zylindrischen Abschnitt (5; 35) entlang zweier Kanten (10, 11) angrenzende konische Abschnitte (8, 9; 38, 39) umfasst, **dadurch gekennzeichnet, dass** sich der zylindrische Abschnitt (5; 35) über mindestens 40% bis maximal 80% der axialen Erstreckung des Lagerrings (2; 32) erstreckt und die konischen Abschnitte (8, 9; 38, 39) jeweils einen Winkel (α, β) von mindestens 5° bis weniger als 15° einschließen.

2. Lagervorrichtung nach Anspruch 1, **dadurch gekennzeichnet, dass** die Kontur (4; 34) der inneren Mantelfläche (3) des auf die Welle weisende Lagerrings (2) spiegelsymmetrisch zu einer axialen Teilungsebene (17) ausgebildet ist.

3. Lagervorrichtung nach Anspruch 1, **dadurch gekennzeichnet, dass** die Kontur (4; 34) der inneren Mantelfläche (3) des auf die Welle weisende Lagerrings (2) asymmetrisch zu einer axialen Teilungsebene (17) ausgebildet ist.

4. Lagervorrichtung nach Anspruch 1, **dadurch gekennzeichnet, dass** der auf die Welle weisende Lagerring (2) als gemeinsamer innerer Lagerring eines zweireihigen Schrägkugellagers in X-Anordnung ausgebildet ist.

5. Lagervorrichtung, umfassend ein Lager, das eine Welle drehbar lagert, und ein Fanglager (1), das die Welle bei Ausfall des Lagers aufnimmt, wobei ein auf die Welle weisender Lagerring (62) des Fanglagers (1) eine innere Mantelfläche (3) mit einer zu der Welle weisenden konvexen Kontur (64) aufweist, **dadurch gekennzeichnet, dass** die Kontur (64) der inneren Mantelfläche (3) des auf die Welle weisenden Lagerrings (62) einen ersten konischen Abschnitt (68) und einen an diesen entlang einer abgerundeten Kante (70) angrenzenden zweiten konischen Abschnitt (69) umfasst wobei die konischen Abschnitte (68, 69) an die Stirnflächen (66, 67) des Lagerrings (62) angrenzen und jeweils einen Winkel (α, β) von mindestens 5° bis weniger als 15° einschließen.

## Claims

1. Bearing device, comprising a bearing which mounts a shaft rotatably, and a holding bearing (1) which receives the shaft if the bearing flails, a bearing ring (2; 32) of the holding bearing (1) which points towards the shaft having an inner circumferential face (3) with a convex contour (4; 34) which points towards the shaft, the contour (4; 34) of the inner circumferential face (3) of the bearing ring (2; 32) which points towards the shaft comprising a cylindrical section (5; 35) and two conical sections (8, 9; 38, 39) which adjoin the cylindrical section (5; 35) on both sides along two edges (10, 11), **characterized in that** the cylindrical section (5; 35) extends over from at least 40% to at most 80% of the axial extent of the bearing ring (2; 32), and the conical sections (8, 9; 38, 39) in each case enclose an angle (α, β) of from at least 5° to less than 15°.

2. Bearing device according to Claim 1, **characterized in that** the contour (4; 34) of the inner circumferential face (3) of the bearing ring (2) which points towards the shaft is of mirror-symmetrical configuration with respect to an axial divining plane (17).

3. Bearing device according to Claim 1, **characterized in that** the contour (4; 34) of the inner circumferential face (3) of the bearing ring (2) which points towards the shaft is of asymmetrical configuration with respect to an axial dividing plane (17).

4. Bearing device according to Claim 1, **characterized in that** the bearing ring (2) which points towards the shaft is configured as a common inner bearing ring of a two-row angular-contact ball bearing in an X-arrangement.

5. Bearing device, comprising a bearing which mounts a shaft rotatably, and a holding bearing (1) which receives the shaft if the bearing fails, a bearing ring (62) of the holding bearing (1) which points towards the shaft having an inner circumferential face (3) with a convex contour (64) which points towards the shaft, **characterized in that** the contour (64) of the inner circumferential face (3) of the bearing ring (62) which points towards the shaft comprises a first conical section (68) and a second conical section (69) which adjoins the former along a rounded edge (70), the conical sections (68, 69) adjoining the end faces (66, 67) of the bearing ring (62) and in each case enclosing an angle (α, β) of from at least 5° to less than 15°.

## Revendications

1. Ensemble palier comprenant un palier, qui supporte à rotation un arbre, et un palier de réception (1) qui reçoit l'arbre en cas de défaillance du palier, une bague de palier (2 ; 32) du palier de réception (1), tournée vers l'arbre, présentant une surface d'enveloppe interne (3) avec un contour convexe (4 ; 34) tourné vers l'arbre, le contour (4 ; 34) de la surface d'enveloppe interne (3) de la bague de palier (2 ; 32) tournée vers l'arbre comprenant une portion cylindrique (5 ; 35) ainsi que deux portions coniques (8, 9 ; 38, 39) adjacentes le long de deux bords (10, 11) de chaque côté de la portion cylindrique (5 ; 35), **caractérisé en ce que** la portion cylindrique (5 ; 35) s'étend sur au moins 40 % jusqu'à au maximum 80 % de l'étendue axiale de la bague de palier (2 ; 32) et les portions coniques (8, 9 ; 38, 39) forment à chaque fois un angle (α, β) d'au moins 5° à moins de 15°.

2. Ensemble palier selon la revendication 1, **caractérisé en ce que** le contour (4 ; 34) de la surface d'enveloppe interne (3) de la bague de palier (2) tournée vers l'arbre est réalisé avec une symétrie spéculaire par rapport à un plan de séparation axial (17).

3. Ensemble palier selon la revendication 1, **caractérisé en ce que** le contour (4 ; 34) de la surface d'enveloppe interne (3) de la bague de palier (2) tournée vers l'arbre est réalisé de manière asymétrique par rapport à un plan de séparation axial (17).

4. Ensemble palier selon la revendication 1, **caractérisé en ce que** la bague de palier (2) tournée vers l'arbre est réalisée sous forme de bague de palier interne commune d'un roulement à deux rangées de billes à contact oblique suivant un agencement en X.

5. Ensemble palier, comprenant un palier qui supporte à rotation un arbre, et un palier de réception (1) qui reçoit l'arbre en cas de défaillance du palier, une bague de palier (62) du palier de réception (1), tournée vers l'arbre, présentant une surface d'enveloppe interne (3) avec un contour convexe (64) tourné vers l'arbre, **caractérisé en ce que** le contour (64) de la surface d'enveloppe interne (3) de la bague de palier (62) tournée vers l'arbre comprend une première portion conique (68) et une deuxième portion conique (69) adjacente à celle-ci le long d'un bord arrondi (70), les portions coniques (68, 69) étant adjacentes aux surfaces frontales (66, 67) de la bague de palier (62) et formant à chaque fois un angle (α, β) d'au moins 5° à moins de 15°.
